# EUROPEAN PATENT APPLICATION

(11) **EP 2 085 919 A1**
(43) Date of publication of application: **05.08.2009**
(21) Application number: 08001860.9
(22) Date of filing: 01.02.2008
(51) Int. Cl.: G06Q 10/00

(54) **Method for providing a template-based calendar**

(71) Applicant: SIEMENS AKTIENGESELLSCHAFT, 80333 München (DE)
(72) Inventor: Crespi, Fabrizio, 18034 Ceriana (IT)
(74) Representative: Fischer, Michael

(57) **Abstract**

Method for creation of a generic calendar, comprising the steps of creating a platform independent calendar template containing multiple user-defined calendar template fields, defining a resource type associated with one user-defined calendar template field, creating an exception template for the resource type, assigning a resource to the resource type, creating a universal unique identifier for the resource, creating at least one user-defined resource attribute field for the resource, storing the platform independent calendar template in a central repository.

## Description

The invention relates to a method for providing a template-based calendar, especially in the field of production planning and scheduling as well as managing shift calendars, whereby availability of resources has to be coordinated in a precise and fast way in order to avoid bottlenecks.

The planning of resources, comprising human and/or equipment and/or materials is very important for production sites in order to insure a minimum possible redundancy, thus increase productivity. Furthermore, shift calendars are used to plan personnel availability in different working shifts. Present solutions create specific calendars by modifying standard calendars. However, these solutions lack a possibility to use patterns and templates, especially availability templates, to apply to the current calendar. Thus, for each new setup of resources belonging to numerous resource types, for example resource types with a variety of different parameters to be taken into account, a customized calendar has to be created, requiring a high effort with respect to managing numerous customized calendars.
In addition, calendar exceptions can only be defined for specific resources. As a consequence, it is difficult to compare exceptions belonging to different resources and to retrieve a complete set of information for scheduling or reporting purposes.

One goal to be achieved is to provide generic calendars based on templates and customizable for specific resources, in order to be able to re-use these generic calendars for a simplified generation of new calendars.

One way the goal is achieved is by furnishing a method for providing a generic calendar.

The description of the method is further explained by the following figures and example:
Figure 1: Basic structure of a calendar template stored in a central repository.
Figure 2: Configuration of two calendar template fields as described in example 1

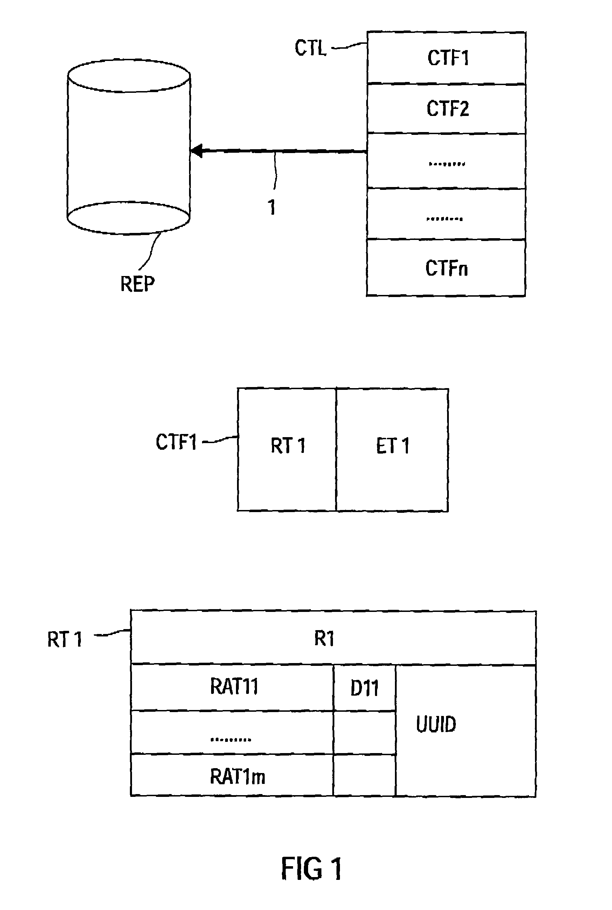

Figure 1 shows a platform independent calendar template CTL, containing calendar template fields CTF1,...,CTFn. The calendar template CTL is stored 1 in a central repository REP. Furthermore figure 1 shows the configuration of the calendar template field CTF1 as being composed of a first field RT1 and a second field ET1. The first field RT1 contains a third field R1, a fourth field UUID and a further set of fields RAT1,...,RATm.
In the following, the first field RT1 will be referred to as resource type, the second field ET1 will be referred to as exception template, the third field R1 will be referred to as resource, the fourth field UUID will be referred to as universal unique identifier and the further set of fields RAT1,...,RATm will be referred to as resource attribute fields.

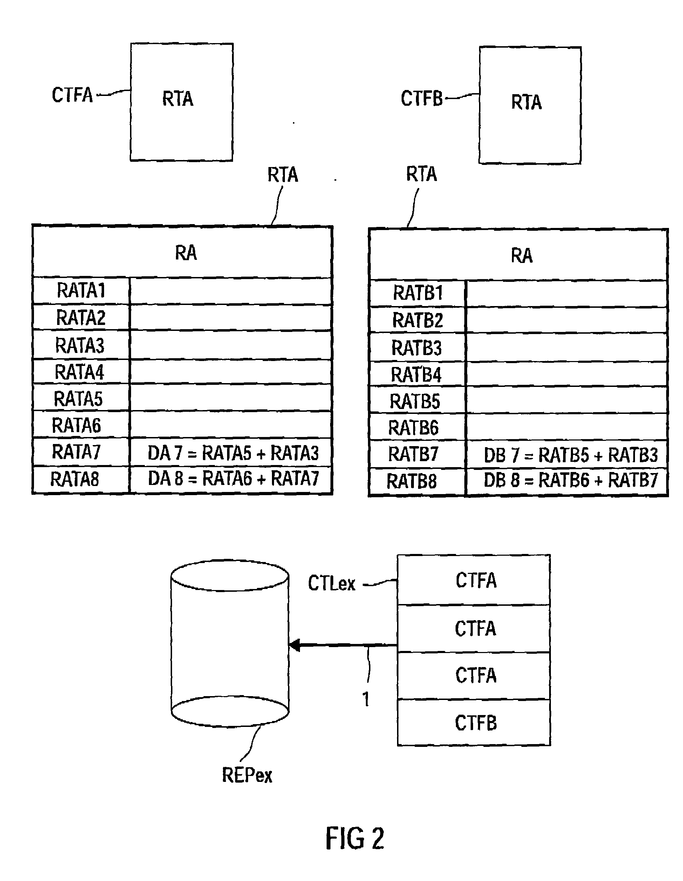

Figure 2 shows a configuration of two calendar template fields CTFA and CTFB, each containing 8 resource attribute fields RATA1,...,RATA8 respectively RATB1,...,RATB8 belonging to resource RA of resource type RTA. Fields containing exception templates and universal unique identifier fields are left out for reasons of clarity. For the two calendar template fields CTFA and CTFB of resource RA, 2 dependency fields are defined, DA7 for RATA7 and DA8 for RATA8 respectively DB7 for RATB7 and DB8 for RATB8. As explained further below, each dependency field contains an operation which characterizes a way to compute the contents of an associated resource attribute field. Furthermore, figure 2 shows the way a calendar template is built up based on data given in example 1.

In the following, notations in figure 1 are used for a general explanation of the method, while notations in figure 2 are used in a description related to following example.

### Example 1:

A month shift calendar shall be created for an assembly line worker X. The month shift calendar shall contain 3 weeks of a first shift and 1 week of a second shift. The first shift comprises 7 working days of an early shift lasting from 8 AM to 4 PM. The second shift comprises 7 working days of a late shift lasting from 4 PM to 12 PM. In each shift, there is a break time period of 30 minutes to be taken after 4 working hours.
Using the method described in this invention, a first calendar template field CTFA is created for the early shift. A second calendar template field CTFB is created for the late shift. The resource type RTA is set to "assembly line worker". The resource RA is set to "assembly line worker X". For CTFA and CTFB, multiple resource attribute fields are defined in the following way:
Fields RATA1 and RATB1 contain a start date for the early shift and the late shift respectively.
Fields RATA2 and RATB2 contain a number of working days for the early shift and the late shift respectively, in this case 7 working days.
Fields RATA3 and RATB3 contain a number of total hours per day for the early shift and the late shift respectively, in this case 8 total hours.
Fields RATA4 and RATB4 contain the break time period for the early shift and the late shift respectively, in this case 30 minutes.
Fields RATA5 and RATB5 contain a working start time for the early shift and the late shift respectively, in this case 8AM and 4PM respectively.
Fields RATA6 and RATB6 contain the working hours until the break for the early shift and the late shift respectively, in this case 4 hours.
Fields RATA7 and RATB7 contain a working end time for the early shift and the late shift respectively, in this case 4PM and 12PM respectively.
Fields RATA8 and RATB8 contain a break start time for the early shift and the late shift respectively, in this case 12AM and 8PM respectively.
The month shift calendar based on the calendar template CTLex is now simply created by using 3 instances of the calendar template field CTFA and one instance of the calendar template field CTFB (as shown at the bottom of Fig. 2). It is stored in a repository REPex, which contains all templates created in the way explained above for various template combinations of the early and/or the late shift.
Once the calendar template CTLex is created and stored, a repeated generation of a month shift calendar with a shift distribution as described above is avoided. Only relevant data in the existing calendar template has to be changed.

For reasons of clarity, only a first calendar template field CTF1 will be mentioned in the following. The description of all other calendar template fields is analogue.

The method for providing a generic calendar comprises the steps of:
a) creating a platform independent calendar template CTL containing multiple user-defined calendar template fields CTF1,...,CTFn,
b) defining a resource type RT1 associated with one user-defined calendar template field CTF1,
c) creating an exception template ET1 for the resource type RT1,
d) assigning a resource R1 to the resource type RT1,
e) creating a universal unique identifier UUID for the calendar template field CTF1,
f) creating at least one user-defined resource attribute field RAT1 for the resource R1,
g) storing the platform independent calendar template CTL in a central repository REP.

Beside the advantage mentioned after the description of example 1, step a) of the method as described in claim 1 of the present invention has another advantage consisting in that the month shift calendar is suitable to be repeatedly used in order to generate for example a year calendar.
In step b) of the method as described in claim 1 of the present invention) a resource type RT1 is assigned to one calendar template field CTF1 of the month shift calendar, in the foregoing example the resource type RTA is set to "assembly line worker". The advantage is that the month shift calendar is uncoupled from the resource type RTA, which is freely chosen by a resource planner.
The resource type RT1 is of various types, for example persons, equipment, etc.
A third step (step c) of the method as described in claim 1 of the present invention) consists in creating the exception template ET1 for the resource type RT1. Each calendar template field CTF1 contains an exception template ET1 which is populated with exception criteria,' for example a holiday time period of the assembly line worker. An advantage is that the exception template ET1 can easily be adapted to changes. Thus, new and/or altered exception information is immediately available for the resource planner.
A fourth step (step d) of the method as described in claim 1 of the present invention) assigns a real existing resource R1 to the resource type RT1, in the example 1 the resource RA being the assembly line worker X. The month shift calendar CTLex can be reused for further resources, in this example being applied for all production line workers.
A fifth step (step e) of the method as described in claim 1 of the present invention) consists in assigning a universal unique identifier UUID to the calendar template field CTF1. This advantageously allows an error-free identification in a context independent way of any stored configuration for a resource R1, avoiding a risk of mismatch.
A sixth step (step f) of the method as described in claim 1 of the present invention) consists in creating resource attribute fields RAT11,...,RAT1m for the resource R1, in the example 1 the CTFA and CTFB contain for the resource RA respectively RATA1,...,RATA8 and RATB1,...,RATB8. In the example 1, this advantageously allows the month shift calendar to be highly customizable in terms of special requirements and/or special parameters associated to the assembly line worker X. A seventh step (step g) of the method as described in claim 1 of the present invention) consists in storing all calendar templates and all associated data, like the exception template ET1 of the resource R1 in a central repository REP. The advantage is that all data regarding the template-based calendars is available in a central storing device, thus allowing an easy identification of bottlenecks in resource availability, resource overlapping, etc. and consequently allowing the resource planner to easily reallocate resources by changing relevant calendar template fields. Furthermore, all said data is available for various departments involved in production, allowing an effective, cross-departmental coordination of resource allocation.

Thus, the most important advantage of the proposed method lies in the reusability of the template-based calendars for numerous resources, resource types and resource usage scenarios.

A dependency field D11 is assigned to the at least one user-defined resource attribute field RAT11. The dependency field D11 contains dependency information, meaning that it is possible to define influences between multiple resource attribute fields RAT11,...,RAT1m and/or multiple resources. This allows a high degree of customization of an interaction between multiple entities involved in a production process. As it is possible to define a variety of different types of resources comprising a variety of features and parameters, the dependency information can be used to bind resource attributes to one another in case these resource attributes have a mutual influence, and/or to bind resources to one another.

A resource availability analysis for at least one existing resource is carried out, the resource availability analysis being based on a totality of the at least one user-defined resource attribute fields. The analysis takes into account available data for the at least one resource like the resource availability time period, the dependency information, the exception criteria. This advantageously makes it easy to check a totality of interactions of all parameters associated with a resource and/or interaction between resources in a project, thus avoiding over-assignments of resources, overlapping timeframes, etc. The resource availability analysis is user-customizable, meaning that the resource planer is able to specify a degree of complexity and a number of resources to be analyzed.

A result of the resource availability analysis reveals an error-free planning as well as a resource availability conflict, the result being signalled to the resource planner. Equally, entities involved in the conflict and parameters involved in the conflict are listed, such that the resource planner easily identifies sources of problems and is able to react fast in taking corrective actions. For example, the analysis yields that a first resource is dependent on a second resource in a period of time T, however the second resource is involved in another action in the period of time T. Thus, a workflow discontinuity occurs.

In a generation process of the calendar template CTL, the resource planner has the possibility to carry out at least one of the following actions: add, edit, delete a resource attribute field RAT11. Besides a use of resource attribute fields RAT11 in the generation of resources R1 based on templates, another aspect is that a resource planning process may require changes in resource attributes evolving during a utilization of an already designed resource plan. In this case, the resource planner advantageously adapts the already designed resource plan in order to take into account the changes, by modifying involved resource attribute fields RAT11.

Software code is provided, which comprises algorithms for creating the calendar templates, carrying out the resource availability analysis and signalling the result of the resource availability analysis. This advantageously allows a bundling of all aspects of the method described herein in one entity such that it is possible for the product planner to carry out all steps from template creation over resource planning until resource availability analysis using only one software tool.

According to a preferred method, user-defined arithmetical operations are performed between at least two resource attribute fields, the said resource attribute fields containing both a numerical field type identifier. This advantageously allows an optimization of needed input data for the resource attribute fields by making it possible for the resource planner to simplify a process of updating a calendar template field CTF1. Furthermore, this method provides an additional robustness regarding input errors.
Extending the example mentioned further above, the resource planner wishes to have a possibility to change the working start time of the early shift without having to change the end time. To accomplish this task, the resource planner defines a dependency field DA7 associated to the field RATA7, the dependency field containing a definition of how to compute a value of the field RATA7, in this case the value being a result of an addition of the fields RATA5 and RATA3. In an analogue way, the break start time resource attribute field RATA8 has an associated dependency field DA8 containing an addition of the fields RATA6 and RATA7. Thus, by changing only one value, the resource planner is able to automatically adjust all dependent fields. This explanation equally applies to DB7 and DB8.
According to another preferred method, user-defined Boolean operations are performed between at least two user-defined resource attribute fields, the said resource attribute fields containing both a Boolean field type identifier. This again extends the flexibility of the method by allowing the resource planner to use conditions in order to describe a validation of a certain resource attribute field. Taking the example mentioned above, an availability for the assembly line worker X in a certain day being is defined by a condition that the worker X is not on holiday.

### List of Abbreviations

- CTL:
- CTF1,...,CTFn: = Calendar Template Fields
- REP: = Central Repository
- RT1: = Resource Type
- ET1: = Exception Template
- R1: = Resource
- 1: = Storing CTL in REP
- RAT11,...,RAT1m: = Resource Attribute Fields
- UUID: = Universal Unique Identifier
- CTLex: = Calendar Template for Example 1
- RA: = Resource Assembly Line Worker X
- CTFA: = Calendar Template Field for Early Shift
- CTFB: = Calendar Template Field for Late Shift
- RTA: = Resource Type Assembly Line Worker
- RATA1,...,RATA8: = Resource Attribute Fields for Early Shift
- RATB1,...,RATB8: = Resource Attribute Fields for Late Shift
- DA7: = Early shift end time dependency
- DA8: = Early shift break start time for early shift
- DB7: = late shift end time dependency
- DB8: = early shift break start time for late shift
- REPex: = Central Repository for CTLex

## Claims

1. Method for creation of a generic calendar, comprising the steps of,
a) creating a platform independent calendar template (CTL) containing multiple user-defined calendar template fields (CTF1,...,CTFn),
b) defining a resource type (RT1) associated with one user-defined calendar template field (CTF1),
c) creating an exception template (ET1) for the resource type (RT1),
d) assigning a resource (R1) to the resource type (RT1),
e) creating a universal unique identifier (UUID) for the calendar template field (CTF1),
f) creating at least one user-defined resource attribute field (RAT11) for the resource (R1),
g) storing the platform independent calendar template (CTL) in a central repository (REP).

2. Method according to claim 1, whereby a dependency field (D11) is assigned to the at least one user-defined resource attribute field (RAT11).

3. Method according to claims 1 or 2, whereby a resource availability analysis for at least two existing resources is carried out, the resource availability analysis being based on a totality of the at least one user-defined resource attribute field (RAT11).

4. Method according to claim 3, whereby a resource availability conflict being a result of the resource availability analysis is signalled to a resource planner.

5. Method according to claim 4, whereby software code comprises algorithms for creating the platform independent calendar template (CTL), carrying out the resource availability analysis and signalling a result of the resource availability analysis.

6. Method according to one of the preceding claims, whereby at least one of the actions: edit, delete, add, is performable on the at least one user-defined resource attribute field (RAT11).

7. Method according to one of the preceding claims, whereby user-defined arithmetical operations are performed between at least two resource attribute fields, the said resource attribute fields containing both a numerical field type identifier.

8. Method according to one of the preceding claims, whereby user-defined Boolean operations are performed between at least two resource attribute fields, the said resource attribute fields containing both a Boolean field type identifier.
